(19) Europäisches Patentamt / European Patent Office / Office européen des brevets

(11) **EP 1 955 019 B1**

(12) **EUROPÄISCHE PATENTSCHRIFT**

(45) Veröffentlichungstag und Bekanntmachung des Hinweises auf die Patenterteilung:
**15.03.2017   Patentblatt 2017/11**

(21) Anmeldenummer: **06841272.5**

(22) Anmeldetag: **23.11.2006**

(51) Int Cl.:
*G01F 1/66* *(2006.01)*          *G01F 1/708* *(2006.01)*
*G01N 29/22* *(2006.01)*        *G10K 11/30* *(2006.01)*
*G01N 29/50* *(2006.01)*        *G01N 29/024* *(2006.01)*
*G10K 11/02* *(2006.01)*

(86) Internationale Anmeldenummer:
**PCT/EP2006/068785**

(87) Internationale Veröffentlichungsnummer:
**WO 2007/063020 (07.06.2007 Gazette 2007/23)**

(54) **ULTRASCHALLMESSVORRICHTUNG ZUR BESTIMMUNG UND/ODER ÜBERWACHUNG DES VOLUMEN- ODER MASSEDURCHFLUSSES EINES MEDIUMS DURCH EINE ROHRLEITUNG**

ULTRASONIC MEASURING APPARATUS FOR DETERMINING AND/OR MONITORING THE VOLUME OR MASS FLOW RATE OF A MEDIUM THROUGH A PIPE

DISPOSITIF DE MESURE À ULTRASONS POUR DÉTERMINER ET/OU SURVEILLER L'ÉCOULEMENT VOLUMIQUE OU MASSIQUE D'UNE SUBSTANCE DANS UNE CONDUITE TUBULAIRE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **02.12.2005   DE 102005057888**

(43) Veröffentlichungstag der Anmeldung:
**13.08.2008   Patentblatt 2008/33**

(73) Patentinhaber: **Endress+Hauser Flowtec AG**
**4153 Reinach (CH)**

(72) Erfinder:
• **JACOBSEN, Saul**
  **CH-4058 Basel (CH)**

• **WIEST, Achim**
  **79576 Weil am Rhein (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**EP-A- 0 387 728     EP-A- 1 096 237**
**JP-A- 4 077 620     JP-A- 5 312 611**
**US-A- 3 230 766**

EP 1 955 019 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung zur Bestimmung und/oder Über-wachung des Volumen- oder Massedurchflusses eines Mediums, das eine Rohrleitung aus einem vorgegebenen Material in Richtung der Längsachse der Rohrleitung durchfließt, mit zumindest einem Ultraschallsensor, der in einer definierten Messposition an der Außenwand der Rohrleitung befestigt ist und der Ultraschall-Messsignale aussendet und/oder empfängt, und mit einer Regel-/Auswerteeinheit, die den Volumen-oder den Massedurchfluss des Mediums in der Rohrleitung nach dem Laufzeitdifferenzverfahren, dem Kreuz-korrelationsverfahren oder dem Dopplerverfahren ermittelt. Bei dem Medium handelt es sich um ein gasförmiges oder ein flüssiges Medium.

Ultraschall-Durchflussmessgeräte der zuvor genannten Art werden vielfach in der Prozess- und Automatisierungstechnik eingesetzt. Sie erlauben es, den Volumen- und/oder Massedurchfluss eines Mediums in einer Rohrleitung berührungslos zu bestimmen. Clamp-On Durchflussmessgeräte sind beispielsweise in der EP 0 686 255 B1, der US-PS 4,484,478 oder der US-PS 4,598,593 beschrieben. Weiterhin werden von der Anmelderin Clamp-On Durchflussmessgeräte, die nach dem Laufzeitdifferenzverfahren arbeiten, unter der Bezeichnung PROSONIC FLOW angeboten und vertrieben.

Die EP 0 387 728 A1 offenbart eine Einrichtung zur Dosierüberwachung eines Klebstoffs, wobei an einem Messrohr Ultraschallsensoren zum Senden und Empfangen von Ultraschallsignalen zur Durchflussmessung in jeweils einem Gehäuse aus Vergussmasse angeordnet sind. Die Signalverarbeitung basiert auf Erzeugung eines Differenzfrequenzsignals aus einer Leitfrequenz und einer Empfangsfrequenz. Die Merkmale gemäß dem Oberbegriff der vorliegenden Patentschrift sind aus der EP 0 387 728 A1 bekannt.

Die US 3 230 766 A offenbart den allgemeinen Gegenstand einer Schalllinse.

Die EP 1 096 237 A1 offenbart einen Ultraschallsensor mit einem schalldämpfenden Gehäuse.

Beim Laufzeitdifferenzverfahren wird die unterschiedliche Laufzeit von Ultraschall-Messsignalen in Strömungsrichtung und entgegen der Strömungs-richtung des Mediums ausgewertet. Aus der Laufzeitdifferenz der Ultraschall-Messsignale lässt sich die Fließgeschwindigkeit und damit bei bekanntem Durchmesser der Rohrleitung der Volumendurchfluss bzw. bei bekannter oder gemessener Dichte des Mediums der Massedurchfluss bestimmen.

Beim Doppler-Prinzip werden Ultraschall-Messsignale mit einer vorgegebenen Frequenz in das strömende Medium eingekoppelt. Die in dem Medium reflektierten Ultraschall-Messsignale werden ausgewertet. Anhand einer zwischen dem eingekoppelten und dem reflektierten Ultraschall-Messsignal auftretenden Frequenzverschiebung lässt sich ebenfalls die Fliessgeschwindigkeit des Mediums bzw. der Volumen- und/oder Massedurchfluss bestimmen.

Der Einsatz von Durchflussmessgeräten, die nach dem Doppler-Prinzip arbeiten, ist nur möglich, wenn in einem flüssigen Medium Luftbläschen oder Verunreinigungen vorhanden sind, an denen die Ultraschall-Messsignale reflektiert werden. Damit ist der Einsatz derartiger Ultraschall-Durchfluss-messgeräte im Vergleich zu den Ultraschall-Durchflussmessgeräten, die z. B. nach dem Laufzeitdifferenz-Prinzip arbeiten, relativ stark beschränkt.

Bei Ultraschall-Durchflussmessgeräten, wenn sie nach dem Laufzeitdifferenz-, dem Doppler- oder dem Kreuzkorrelatitonsverfahren arbeiten, werden die Ultraschall-Messsignale unter einem vorgegebenen Winkel in die Rohrleitung bzw. in das Messrohr, in der bzw. in dem sich das strömende Medium befindet, ein- und angekoppelt. Um eine optimale Impedanzanpassung und damit optimale Ein- und Auskopplung zu erreichen, werden die Ultraschall-Messsignale über einen Vorlaufkörper bzw. einen Koppelkeil in die Rohrleitung bzw. in das Messrohr eingekoppelt bzw. aus der Rohrleitung bzw. aus dem Messrohr angekoppelt. Hauptbestandteil eines Ultraschallsensors ist zumindest ein piezoelektrisches Element, welches die Ultraschall-Messsignale in einem definierten Frequenzbereich erzeugt und/oder empfängt.

Die in einem piezoelektrischen Element erzeugten Ultraschall-Messsignale werden über einen Koppelkeil bzw. einen Vorlaufkörper und die Rohrwand in das fluide Medium geleitet. Bei dem Medium handelt es sich - wie bereits gesagt - entweder um eine Flüssigkeit oder um ein Gas. Aufgrund der relativ stark von dem Medium abhängigen Schallgeschwindigkeit kommt es an der Grenzfläche zweier unterschiedlicher Medien zu einer Brechung der Ultra-schall-Messsignale. Der jeweilige Brechungswinkel errechnet sich nach dem Snellius Gesetz, d.h der Brechungswinkel ist abhängig von dem Verhältnis der Ausbreitungsgeschwindigkeiten zweier aneinander grenzender Medien.

Besonders problematisch gestaltet sich die Ein- und Auskopplung der Ultraschall-Messsignale, wenn die Rohrleitung aus Metall gefertigt ist und in der Rohrleitung ein gasförmiges Medium strömt. Da die Schallgeschwindig-keit eines Metalls und eines Gases üblicherweise einen Unterschied von einer Größenordnung aufweisen, wird an der Grenzfläche sowohl beim Einkoppeln als auch beim Auskoppeln ein Großteil der Ultraschall-Messsignale rückreflektiert. Der rückreflektierte Anteil ist so groß, dass mit einem konventionellen Ultraschallsensor keine verlässliche Durchflussmessung möglich ist.

Daher sind bereits Lösungen bekannt geworden, bei denen ein Ultraschall-sensor die Ultraschall-Messsignale gebündelt in die Rohrleitung einstrahlt. Die bekannt gewordenen fokussierenden Ultraschallsensoren zeigen unterschiedliche Ausgestaltungen auf. Beispiele für bekannte fokussierende Ultraschallsensoren sind in der US-PS 4,205,686 und in der US-PS 4,184,094 genannt. Bei beiden bekannten Lösungen ist das piezoelektrische Element konkav oder konvex ausgebildet. Es versteht sich von selbst, dass eine Krümmung eines piezoelektrischen Elements eine relativ teuere Lösung darstellt.

Der Erfindung liegt die Aufgabe zugrunde, einen kostengünstigen Ultraschallsensor für ein Durchflussmessgerät bereitzustellen, der es ermöglicht, Ultraschall-Messsignale mit einer relativ hohen Intensität in eine Rohrleitung ein- bzw. aus einer Rohrleitung auszukoppeln.

Die Aufgabe wird dadurch gelöst, dass der Ultraschallsensor ein Gehäuse, ein piezoelektrisches Element und einen aus zumindest zwei formschlüssigen Teilelementen bestehenden Vorlaufkörper aufweist, wobei die Teilelemente des Vorlaufkörpers so ausgestaltet sind, dass sie die Ultraschall-Messsignale in einen ausgewählten Bereich der Rohrleitung fokussiert werden, wobei die Materialien der Teilelemente des Vorlaufkörpers so gewählt sind, dass die Transmission der Ultraschall-Messsignale auf dem durch den Vorlaufkörper verlaufenden Schallpfad maximal ist, und wobei das Gehäuse so ausgestaltet ist, dass im Vorlaufkörper oder in der Wandung der Rohrleitung Störsignale gedämpft werden, wobei eine Innenwand des Gehäuses zumindest im Bereich des Vorlaufkörpers eine gezackte oder gewellte Struktur zur Dämpfung von Störsignalen aufweist. Während durch die erfindungsgemäße Ausgestaltung des Vorlaufkörpers die in die Rohrleitung eingestrahlte Energie maximiert wird, wird durch die spezielle Ausgestaltung des Gehäuses der Anteil der Störstrahlung in den Ultraschall-Messsignalen minimiert.

Gemäß einer Weiterbildung wird alternativ oder additiv wird zwecks Dämpfung von Störsignalen vorgeschlagen, dass die Innenwand des Gehäuses in Richtung der Längsachse des Gehäuses konisch ausgebildet ist. Hierdurch wird die Dämpfung von Störsignalen, weiterhin verbessert.

Eine bevorzugte Ausgestaltung der erfindungsgemäßen Vorrichtung sieht vor, dass das piezoelektrische Element planar ausgebildet ist. Diese Ausgestaltung macht den erfindungsgemäßen Ultraschallsensor sehr kostengünstig

Bevorzugt sind die beiden formschlüssigen Teilelemente des Vorlaufkörpers als Linse ausgestaltet sind. Durch die Ausbildung eines Teilelements als Linse wird erreicht, dass die Ultraschall-Messsignale in einen ausgewählten Bereich der Rohrleitung oder der Wandung der Rohrleitung fokussiert werden. Somit wird sichergestellt, dass ein hoher Anteil der ausgesendeten Ultraschall-Mess-signale für die Ermittlung der Strömungsgeschwindigkeit des in der Rohr-leitung strömenden Mediums auch tatsächlich genutzt wird.

Um einen hohen Transmissionsanteil der regulären - also nicht mehrfach reflektierten - Ultraschall-Messsignale durch den Vorlaufkörper zu erreichen, weisen die Materialien der Teilelemente des Vorlaufkörpers Dämpfungs-konstanten auf, die kleiner sind als die Dämpfungskonstante des Materials des Gehäuses, in dem der Vorlaufkörper plaziert ist. Bevorzugt ist der als Linse ausgebildete Teil des Vorlaufkörpers aus zumindest einem Kunststoff gefertigt. Alternativ kann er auch aus einer Keramik, z.B. aus Aluminiumdioxid bestehe, wobei diese Ausgestaltung insoweit interessant ist, als die Schallgeschwindigkeit von Aluminiumdioxid größer ist als die Schallge-schwindigkeit von z.B. Edelstahl ist. Bevorzugt besteht das zweite Teilelement des Vorlaufkörpers aus möglichst dem gleichen Metall wie die Rohrleitung. Somit treten zwischen dem Vorlaufkörper und der Rohrleitung nur geringe Verluste im Hinblick auf die ein- und ausgekoppelten Ultraschall-Messsignale auf.

Um die auftretende Streustrahlung möglichst schnell zu dämpfen - diese würde die Empfindlichkeit des Ultraschall-Messgeräts erheblich beein-trächtigen - bestehen die Außenbereiche des zweiten Teilelementes des Vorlaufkörpers bevorzugt mit einem stark dämpfenden Material. Entweder ist die Berührfläche zwischen dem Vorlaufkörper und der Rohrleitung tangential zur Rohrleitung ausgerichtet, oder die Berührfiläche hat eine zur Rohrleitung analoge Krümmung. Die Beschichtung bzw. die Außenlage besteht beispiels-weise aus einem Epoxidharz mit Einlagerungen aus Wolframpulver.

Gemäß einer vorteilhaften Weiterbildung der erfindungsgemäßen Vorrichtung ist - wie bereits kurz angedeutet - vorgesehen, dass der der Rohrleitung zugewandte Teilbereich des Vorlaufkörpers aus dem gleichen Material gefertigt ist wie die Rohrleitung. Beispielsweise bestehen beide aus Edelstahl. Für die Ausgestaltung des erfindungsgemäßen Ultraschallsensors bedeutet dies, dass eine Linse aus Kunststoff oder Keramik und ein zweites Teilelement, das aus Stahl gefertigt ist, den Vorlaufkörper bilden. Durch diese Ausgestaltung wird eine sehr gute Kopplung zwischen dem Vorlaufkörper und der Rohrleitung erreicht, wobei noch durchaus zwischen dem Vorlaufkörper und der Rohrleitung ein Kopplungsmedium vorgesehen sein kann. Bevorzugt liegt der Fokus der Linse im Bereich der Berührfläche zwischen dem aus Stahl bzw. aus dem Material der Rohrleitung gefertigten Teilelement und der Rohr-leitung selbst. Hierdurch werden die Intensitätsverluste der Ultraschall-Mess-signale an der Grenzfläche zwischen dem Vorlaufkörper und der Rohrleitung relativ gering gehalten.

Eine Minimierung der Intensitätsverluste an der Grenz-fläche zwischen dem Ultraschallsensor und Rohrleitung ist insbesondere dann unverzichtbar, wenn in der Rohrleitung der Volumenstrom eines gasförmigen Mediums gemessen werden soll. Bekanntlich liegt die übliche Schallgeschwindigkeit eines Gases um ca. eine Größenordnung unter der Schallgeschwindigkeit eines Metalls. Infolge des großen Unterschieds in den Schallgeschwindigkeiten wird per se ein großer Teil der an der Grenz-fläche auftreffenden Ultraschall-Messsignale aus dem Schallpfad herausgebrochen. Durch die erfindungsgemäße Ausgestaltung des Ultraschallsensors ist es jedoch möglich, Ultraschall-Messsignale mit einer für eine Gasstrommessung ausreichenden Intensität in die Rohr-

leitung ein- bzw. aus der Rohrleitung auszukoppeln.

Eine bevorzugte Ausgestaltung des erfindungsgemäßen als Linse ausgebildeten Vorlaufkörpers sieht vor, dass die Linse zylindrisch ausgestaltet ist, wobei eine Achse parallel zur Strömungsrichtung des Mediums in der Rohrleitung ausgerichtet ist. Die gewählte Krümmung der Linse hängt ganz wesentlich von dem Verhältnis der Schallgeschwindigkeiten der Materialien ab, aus denen die beiden Teilbereiche des Vorlaufkörpers gefertigt sind.

Gemäß einer Ausführungsform der erfindungsgemäßen Vorrichtung wird vorgeschlagen, den Vorlaufkörper in zumindest einem Teilbereich aus einem Material zu fertigen, dessen akustische Impedanz näherungsweise gleich der Impedanz des piezoelektrischen Elements ist. Bevorzugt handelt es sich hierbei zumindest um den Teilbereich des Vorlaufkörpers, der dem piezoelektrischen Element zugewandt ist.

Weiterhin wird vorgeschlagen, dass der Vorlaufkörper als Linse ausgestaltet ist und zumindest in einem Teilbereich aus demselben Material gefertigt ist wie das Gehäuse. Weiterhin ist vorgesehen, dass der als Linse ausgestaltete Vorlaufkörper zumindest in einem Teilbereich - bevorzugt handelt es sich hierbei ebenfalls um den dem piezoelektrischen Element zugewandten Teilbereich - aus einer Keramik gefertigt ist.

Die Erfindung wird anhand der nachfolgenden Figuren näher erläutert. Es zeigt:

Fig. 1: eine Seitenansicht einer ersten Ausführungsform eines erfindungsgemäßen Ultraschallsensors,
Fig. 1a: einen Längsschnitt gemäß der Kennzeichnung A-A in Fig. 1,
Fig. 1b: eine Seitenansicht des erfindungsgemäßen Ultraschallsensors mit einem teilweisen Längsschnitt gemäß der Kennzeichnung B-B in Fig. 1,
Fig. 1c: eine Draufsicht auf den Ultraschallsensor gemäß der Kennzeichnung C-C in Fig. 1,
Fig. 2: eine Seitenansicht einer zweiten Ausführungsform eines erfindungsgemäßen Ultraschallsensors,
Fig. 2a: eine Seitenansicht des erfindungsgemäßen Ultraschallsensors mit einem teilweisen Längsschnitt gemäß der Kennzeichnung A-A in Fig. 2,
Fig. 2b: eine Draufsicht auf den Ultraschallsensor gemäß der Kennzeichnung B-B in Fig. 2,
Fig. 3: eine schematische Darstellung einer dritten bevorzugten Ausgestaltung eines erfindungsgemäßen Ultraschallsensors und
Fig. 4: eine Visualisierung der unterschiedlichen auf einem Schallpfad in einem Ultraschall-Durchflussmessgerät auftretenden Impedanzen.

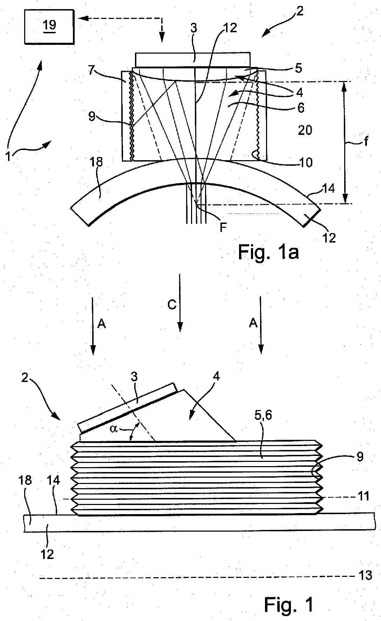

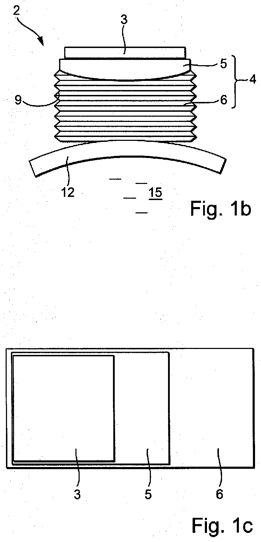

In den Figuren Fig. 1, Fig. 1a, Fig. 1b und Fig. 1c ist eine erste Ausgestaltung des erfindungsgemäßen Ultraschallsensors 2 für ein Ultraschall-Durchflussmessgerät 1 dargestellt, bei dem der Vorlaufkörper 4 die Ultraschall-Messsignale unter einem von einem rechten Winkel abweichenden Winkel $\alpha$ in die Rohrleitung 12 einkoppelt bzw. aus der Rohrleitung 12 auskoppelt. Entsprechend ausgestaltete Vorlaufkörper 4 sind bei Ultraschall-Durchflussmessgeräten zu verwenden, die den Volumen- oder Massedurchfluss nach dem Laufzeitdifferenz-Prinzip oder nach dem Doppler-Prinzip bestimmen. Insbesondere zeigt Fig. 1 eine Seitenansicht, Fig. 1a einen Längsschnitt gemäß der Kennzeichnung A-A in Fig. 1, Fig. 1b eine Seitenansicht des erfindungsgemäßen Ultraschallsensors 2 mit einem teilweisen Längsschnitt gemäß der Kennzeichnung B-B in Fig. 1 und Fig. 1c eine Draufsicht auf den Ultraschallsensor 2 gemäß der Kennzeichnung C in Fig. 1.

Der Ultraschallsensor 2 weist ein rohrförmiges Gehäuse 7 auf, in dem zwei formschlüssig aneinander grenzende Teilelemente 5, 6 angeordnet sind. Oberhalb des ersten Teilelements 5, das als Linse ausgebildet ist, befindet sich ein piezoelektrisches Element 3. Eventuell handelt es sich bei dem piezoelektrischen Element 3 um ein ansteuerbares Array aus piezoelektrischen Elementen. Zu erwähnen ist hierbei, dass das piezoelektrische Element 3 bzw. das Array aus piezoelektrischen Elementen 3 planar ausgebildet ist.

Die beiden Teilelemente 5, 6 des Vorlaufkörpers 4 sind so ausgestaltet sind, dass sie die Ultraschall-Messsignale in einen ausgewählten Bereich der Rohrleitung 12 fokussieren. Insbesondere ist das erste Teilelement 5 als Linse ausgebildet. Wie in Fig. 1a zu sehen, ist die Linse 5 konvex ausgestaltet und fokussiert die Ultraschall-Messsignale in die Rohrleitung 12. Alternativ liegt der Fokus F des Vorlaufkörpers 4 in der Wandung 18 der Rohrleitung 12. Generell lässt sich die Lage des Fokus' des als Linse ausgebildeten Vorlaufkörpers 4 folgendermaßen berechnen:

$$1/f = (n\text{-}1) \, / \, R$$

wobei n der Brechungsindex ist, der sich errechnet nach $n = c_2/c_1$.

Hierbei ist $C_1$ die Schallgeschwindigkeit in der Linse 5, die beispielsweise aus Plastik gefertigt ist, und $C_2$ die Schallgeschwindigkeit in dem zweiten Teilelement 6, das bevorzugt aus dem selben Material, z.B. Stahl wie die Rohrleitung 12 gefertigt ist. R kennzeichnet den Radius der konvexen Linse 5.

Die Materialien der beiden Teilelemente 5, 6 des Vorlaufköpers 4 sind so gewählt, dass die Transmission der Ultraschall-Messsignale auf dem durch den Vorlaufkörper 4 verlaufenden Schallpfad SP maximal ist. Das Gehäuse 7 ist so ausgestaltet, dass im Vorlaufkörper 4 oder in der Wandung 18 der Rohrleitung 12 mehrfach reflektierte Ultraschall-Messsignale gedämpft werden. In der Fig. 1a sind zwei Alternativen dargestellt, wie die Störsignale effektiv gedämpft werden können: Bei einer ersten Ausgestaltung ist zumindest die Innenwand 10 des Gehäuses 7 mit einer gezackten Struktur 9 versehen.

Alternativ verjüngt sich die Innenwand 10 des Gehäuses 7 konisch in Richtung der Rohrleitung 12. Alternativ oder additiv ist vorgesehen, dass das Gehäuse 7 zumindest teilweise aus einem stark dämpfenden Material gefertigt ist. Bevorzugt wird in diesem Zusammenhang Epoxydharz mit Einlagerungen aus Wolfram eingesetzt. Während infolge der erfindungs-gemäßen Ausgestaltung des Vorlaufkörpers 4 die in die Rohrleitung 12 eingestrahlte Energie maximiert wird, wird durch die spezielle Ausgestaltung des Gehäuses 7 der Anteil der Störstrahlung in den Ultraschall-Messsignalen minimiert. Hierdurch wird die Messgenauigkeit erhöht.

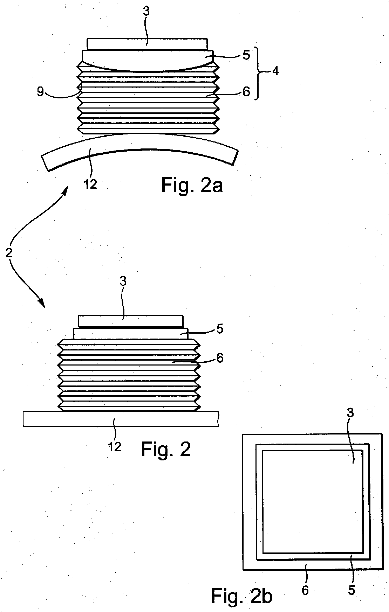

In den Figuren Fig. 2, Fig. 2a und Fig. 2b ist ein Ultraschallsensor 2 zu sehen, der für die Anwendung in einem Ultraschall-Durchflussmessgerät 1 geeignet ist, das nach dem Kreuzkorrelations-Prinzip arbeitet. Hier werden die Ultra-schall-Messsignale senkrecht zur Strömungsrichtung des Mediums 15 in die Rohrleitung 12 ein- bzw. aus der Rohrleitung 12 ausgekoppelt. Insbesondere zeigt Fig. 2 eine Seitenansicht einer Ausführungsform eines entsprechenden Ultraschallsensors 2, Fig. 2a eine Seitenansicht des erfindungsgemäßen Ultraschallsensors 2 mit einem teilweisen Längsschnitt gemäß der Kenn-zeichnung A-A in Fig. 2 und Fig. 2b eine Draufsicht auf den Ultraschallsensor 2 gemäß der Kennzeichnung B-B in Fig. 2.

Abgesehen von der geometrischen Ausgestaltung des Vorlaufkörpers 4 weist der Ultraschallsensor 2, der in den Figuren Fig. 2, Fig. 2a und Fig. 2b gezeigt ist, vergleichbare Merkmale auf wie der zuvor beschriebene Ultraschallsensor 2, der für Ultraschall-Durchflussmessgeräte 1 geeignet ist, die nach dem Laufzeitdifferenz-Prinzip oder nach dem Doppler-Prinzip Durchfluss-Messwerte bereitstellen.

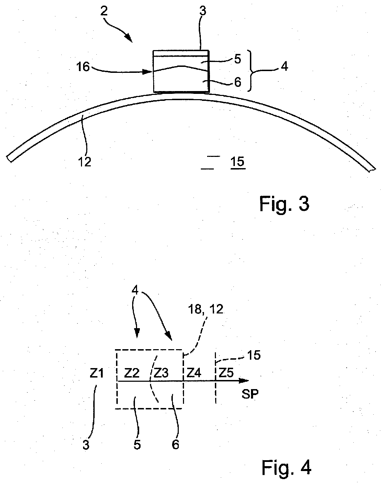

In Fig. 3 ist eine schematische Darstellung eines erfindungsgemäßen Ultraschall-Durchflussmessgeräts 1 zu sehen, das an einer Rohrleitung 12, die von einem Medium 15 durchflossen wird, befestigt ist. Im gezeigten Fall hat die Linse 5 eine V-förmige Ausgestaltung. In Fig. 4 sind die Impedanzen der unterschiedlichen Teilkomponenten - piezoelektrisches Element 3, Linse 5, zweites Teilelement 6 des Vorlaufkörpers 4, Rohrwand 18 und Medium 15 - dargstellt, die sukzessive von den Ultraschall-Messsignalen auf dem Schallpfad SP durchlaufen werden. Die Krümmung der Linse 5 hängt entscheidend von dem Verhältnis der Schallgeschwindigkeiten in der Linse 5 und in dem zweiten Teilelement 6 ab.

Nachfolgend sind typische akustische Impedanzen von Materialien angegeben, die im Zusammenhang mit dem erfindungsgemäßen Ultraschallsensor 2 verwendet werden können:

$$Z1 = \text{ca. } 30 \times 10E6$$

$$Z2 = (Z1 \times Z3)^{\wedge}0.5$$

$$Z3 = (Z2 \times Z4)^{\wedge}0.5$$

$$Z1 = 30 \times 10E6$$

$$Z4 = 2 \dots 50 \times 10E6$$

Die Impedanz von Stahl beträgt Z4 = 50x10E6. Bevorzugt werden Z2 und Z3 bezüglich Z4 optimiert.

$$Z5 = 0.0004 \text{ (Luft)} \dots 1.5 \text{ (Wasser)}$$

Hieraus ergibt sich bei senkrechtem Einfall - keine Brechung beim Übergang in die Wandung 18 der Rohrleitung 12 und in das Medium 15 - folgender Reflektionsfaktor R:

$$R = (Z1-Z2) / (Z1+Z2).$$

Um den Reflexionsfaktor R erfindungsgemäß zu minimieren, sind die Materialien, die Ultraschall-Messsignale durchlaufen, entsprechend auszuwählen.

## Bezugszeichenliste

| | |
|---|---|
| 1 | Erfindungsgemäße Vorrichtung |
| 2 | Ultraschallsensor |
| 3 | piezoelektrisches Element |
| 4 | Vorlaufkörper |
| 5 | erstes Teilelement bzw. Linse |
| 6 | zweites Teilelement |
| 7 | Gehäuse |
| 8 | Beschichtung bzw. Außenschicht |
| 9 | gezackte Struktur |
| 10 | Innenwand des Gehäuses |
| 11 | Längsachse des Gehäuses |
| 12 | Rohrleitung |
| 13 | Längsachse der Rohrleitung |
| 14 | Außenwand |
| 15 | Medium |
| 16 | Berührungsfläche |
| 17 | Grenzfläche |
| 18 | Wandung |
| 19 | Regel-/Auswerteeinheit |
| 20 | konische Struktur |

**Patentansprüche**

1. Vorrichtung zur Bestimmung und/oder Überwachung des Volumen- oder Massedurchflusses eines Mediums (15), das eine Rohrleitung (12) aus einem vorgegebenen Material in Richtung der Längsachse (13) der Rohrleitung (12) durchfließt, mit zumindest einem Ultraschallsensor (2), der in einer definierten Messposition an der Außenwand (14) der Rohrleitung (12) befestigt ist und der Ultraschall-Messsignale aussendet und/oder empfängt, und mit einer Regel-/Auswerteeinheit (19), die den Volumen- oder den Massendurchfluss des Mediums (15) in der Rohrleitung (12) nach dem Laufzeitdifferenz-verfahren, dem Kreuzkorrelationsverfahren oder dem Dopplerverfahren ermittelt, wobei der Ultraschallsensor (2) ein Gehäuse (7), ein piezoelektrisches Element (3) und einen aus zumindest zwei formschlüssigen Teilelementen (5, 6) bestehenden Vorlaufkörper (4) aufweist, wobei die Teilelemente (5, 6) des Vorlaufkörpers (4) so ausgestaltet sind, dass die Ultraschall-Messsignale in einen ausgewählten Bereich der Rohrleitung (12) fokussiert werden, **dadurch gekennzeichnet, dass** die Materialien der Teilelemente (5, 6) des Vorlaufkörpers (4) so gewählt sind, dass die Transmission der Ultraschall-Messsignale auf dem durch den Vorlaufkörper (4) verlaufenden Schallpfad (SP) maximal ist, und dass das Gehäuse (7) so ausgestaltet ist, dass im Vorlaufkörper (4) oder in der Wandung (18) der Rohrleitung (12) Störsignale gedämpft werden, wobei eine Innenwand (10) des Gehäuses (7) zumindest im Bereich des Vorlaufkörpers (4) eine gezackte oder gewellte Struktur zur Dämpfung von Störsignalen aufweist.

2. Vorrichtung nach Anspruch 1,
**dadurch gekennzeichnet,**
**dass** die Innenwand (10) des Gehäuses (7) in Richtung der Längsachse (11) des Gehäuses (7) konisch ausgebildet ist.

3. Vorrichtung nach Anspruch 1,
**dadurch gekennzeichnet,**
**dass** das piezoelektrische Element (3) planar ausgebildet ist.

4. Vorrichtung nach Anspruch 1,
**dadurch gekennzeichnet,**
**dass** zumindest eines der beiden Teilelemente (5, 6) des Vorlaufkörpers (7) als Linse (5) ausgestaltet ist, die die Ultraschall-Messsignale in einen ausgewählten Bereich der Rohrleitung (12) oder der Wandung (18) der Rohrleitung (12) fokussieren.

5. Vorrichtung nach Anspruch 1 oder 2
**dadurch gekennzeichnet,**
**dass** die Materialien der Teilelemente (5, 6) des Vorlaufkörpers (4) eine Dämpfungskonstanten aufweisen, die kleiner sind als die Dämpfungs-konstante des Materials des Gehäuses (7), in dem der Vorlaufkörper (4) plaziert ist.

6. Vorrichtung nach Anspruch 4,
**dadurch gekennzeichnet,**
**dass** der als Linse (5, 6) ausgestaltete Vorlaufkörper (4) zumindest in einem Teilbereich aus Kunststoff gefertigt ist.

7. Vorrichtung nach Anspruch 1, 4 oder 5,
**dadurch gekennzeichnet,**
**dass** das Gehäuse (7) rohrförmig ausgestaltet ist; dass der Vorlaufkörper (4) aus zwei formschlüssigen Teilelementen (5, 6), einem ersten Teilelement (5) und einem zweiten Teifelement (6) besteht, und dass das zweite Teilelement (6) aus dem gleichen Material gefertigt ist wie die Rohrleitung (12).

8. Vorrichtung nach Anspruch 6,
**dadurch gekennzeichnet,**
**dass** die Linse (5) zylindrisch ausgestaltet ist.

9. Vorrichtung nach Anspruch 6,
**dadurch gekennzeichnet,**
**dass** die beiden Teilelemente (5, 6) des als Linse ausgebildeten Vorlauf-körpers (4) eine V-förmige Berührungsfläche (16) aufweisen.

10. Vorrichtung nach Anspruch 1 oder 4,
**dadurch gekennzeichnet,**
**dass** der Vorlaufkörper (4) in zumindest einem Teilbereich (5) aus einem Material gefertigt ist, dessen akustische Impedanz näherungsweise gleich der akustischen Impedanz des piezoelektrischen Elements (2) ist.

11. Vorrichtung nach Anspruch 6, 8, 9 oder 10,
**dadurch gekennzeichnet,**
**dass** der Vorlaufkörper (4) als Linse (5; 5, 6) ausgestaltet ist und zumindest in einem Teilbereich aus demselben Material gefertigt ist wie das Gehäuse (7).

12. Vorrichtung nach Anspruch 1, 6, 8, 9 oder 10,
**dadurch gekennzeichnet,**
**dass** der Vorlaufkörper (4) als Linse (5; 5, 6) ausgestaltet ist und zumindest in einem Teilbereich aus einer Keramik gefertigt ist.

**Claims**

1. Apparatus designed to determine and/or monitor the volume flow or mass flow of a medium (15), which flow through a pipe (12) made of a predefined material in the direction of the longitudinal axis (13) of the pipe (12), with at least one ultrasonic sensor (2), which is fixed in a defined measuring position on the outer wall (14) of the pipe (12) and which emits and/or receives ultrasonic measuring signals, and with a control/evaluation unit (19), which determines the volume flow or mass flow of the medium (15) in the pipe (12) according to the time-of-flight method, the cross-correlation method or the Doppler method, wherein the ultrasonic sensor (2) has a housing (7), a piezoelectric element (3) and a propagation body (4) consisting of at least two positive-locking sub-elements (5, 6), the sub-elements (5, 6) of the propagation body (4) being designed in such a way that the ultrasonic measuring signals are focused on a selected area of the pipe (12),
**characterized in that**
the materials of the sub-elements (5, 6) of the propagation body (4) are selected in such a way that the transmission of the ultrasonic measuring signals to the sonic path (SP) running through the propagation body (4) is maximum, and
that the housing (7) is designed in such a way that interference signals are damped in the propagation body (4) or in the wall (18) of the pipe (12), wherein an interior wall (10) of the housing (7) has a serrated or corrugated structure for damping interference signals at least in the area of the propagation body (4).

2.  Apparatus as claimed in Claim 1,
    **characterized in that**
    the interior wall (10) of the housing (7) has a conical shape in the direction of the longitudinal axis (11) of the housing (7).

3.  Apparatus as claimed in Claim 1,
    **characterized in that**
    the piezoelectric element (3) has a planar shape.

4.  Apparatus as claimed in Claim 1,
    **characterized in that**
    at least one of the two sub-elements (5, 6) of the propagation body (7) is designed as a lens (5) that focuses the ultrasonic measuring signals in a selected area of the pipe (12) or the wall (18) of the pipe (12).

5.  Apparatus as claimed in Claim 1 or 2,
    **characterized in that**
    the materials of the sub-elements (5, 6) of the propagation body (4) have damping constants that are smaller than the damping constants of the material of the housing (7) in which the propagation body is positioned (4).

6.  Apparatus as claimed in Claim 4,
    **characterized in that**
    the propagation body (4) designed as a lens (5, 6) is made from plastic at least in a section.

7.  Apparatus as claimed in Claim 1, 4 or 5,
    **characterized in that**
    the housing (7) is tubular in shape; **in that** the propagation body (4) consists of two positive-locking sub-elements (5, 6), a first sub-element (5) and a second sub-element (6), and **in that** the second sub-element (6) is made from the same material as the pipe (12).

8.  Apparatus as claimed in Claim 6,
    **characterized in that**
    the lens (5) is cylindrical in shape.

9.  Apparatus as claimed in Claim 6,
    **characterized in that**
    the two sub-elements (5, 6) of the propagation body (4) designed as a lens has a V-shaped contact surface (16).

10. Apparatus as claimed in Claim 1 or 4,
    **characterized in that**
    at least a section (5) of the propagation body (4) is made from a material whose acoustic impedance is approximately equal to the acoustic impedance of the piezoelectric element (2).

11. Apparatus as claimed in Claim 6, 8, 9 or 10,
    **characterized in that**
    the propagation body (4) is designed as a lens (5 ; 5, 6) and at least a section of it is made from the same material as the housing (7).

12. Apparatus as claimed in Claim 1, 6, 8, 9 or 10,
    **characterized in that**
    the propagation body (4) is designed as a lens (5 ; 5, 6) and at least a section of it is made from a ceramic.

**Revendications**

1.  Dispositif destiné à la détermination et/ou la surveillance du débit volumique et/ou massique d'un produit (15), qui circule dans une conduite (12) constituée d'un matériau prédéfini en direction de l'axe longitudinal (13) de la conduite (12), avec au moins un capteur à ultrasons (2), qui est fixé dans une position de mesure définie sur la paroi extérieure (14) de la conduite (12) et qui émet et/ou reçoit des signaux de mesure ultrasonores, et avec une unité de régulation / d'exploitation (19), qui détermine le débit volumique ou massique du produit (15) dans la conduite (12) d'après la méthode de la différence des temps de propagation, la méthode de la corrélation croisée ou de la méthode Doppler,
    pour lequel le capteur à ultrasons (2) comporte un boîtier (7), un élément piézoélectrique (3) et un avant-corps (4) composé d'au moins deux sous éléments (5, 6) de forme appropriée, les sous-éléments (5, 6) de l'avant-corps (4) étant conçus de telle sorte que les signaux de mesure ultrasonores sont focalisés dans une zone sélectionnée de la conduite (12), **caractérisé**

**en ce que** les matériaux des sous-éléments (5, 6) de l'avant-corps (4) sont sélectionnés de telle sorte que la transmission des signaux de mesure ultrasonores est maximale sur le chemin sonore (SP) traversant l'avant-corps (4), et

**en ce que** le boîtier (7) est conçu de telle sorte que les signaux parasites sont atténués dans l'avant-corps (4) ou dans la paroi (18) de la conduite (12), une paroi intérieure (10) du boîtier (7) présentant au moins dans la zone de l'avant-corps (4) une structure dentelée ou ondulée destinée à l'atténuation des signaux parasites.

2. Dispositif selon la revendication 1,
   **caractérisé**
   **en ce que** la paroi intérieure (10) du boîtier (7) est conçue de façon conique en direction de l'axe longitudinal (11) du boîtier (7).

3. Dispositif selon la revendication 1,
   **caractérisé**
   **en ce que** l'élément piézoélectrique (3) est conçu de façon planaire.

4. Dispositif selon la revendication 1,
   **caractérisé**
   **en ce qu'**au moins l'un des deux sous-éléments (5, 6) de l'avant-corps (7) est conçu sous forme de lentille (5), qui focalise les signaux de mesure ultrasonores dans une zone sélectionnée de la conduite (12) ou de la paroi (18) de la conduite (12).

5. Dispositif selon la revendication 1 ou 2,
   **caractérisé**
   **en ce que** les matériaux des sous-éléments (5, 6) de l'avant-corps (4) présentent des constantes d'atténuation, qui sont inférieures à la constante d'atténuation du matériau du boîtier (7), dans lequel est placé l'avant-corps (4).

6. Dispositif selon la revendication 4,
   **caractérisé**
   **en ce qu'**au moins une zone partielle de l'avant-corps (4) conçu sous forme de lentille (5, 6) est constituée de plastique.

7. Dispositif selon la revendication 1, 4 ou 5,
   **caractérisé**
   **en ce que** le boîtier (7) est conçu de façon tubulaire ; en ce que l'avant-corps est composé de deux sous-éléments (5, 6) de forme appropriée, un premier sous-élément (5) et un deuxième sous-élément (6), et en ce que le deuxième sous-élément (6) est constitué du même matériau que celui de la conduite (12).

8. Dispositif selon la revendication 6,
   **caractérisé**
   **en ce que** la lentille (5) est conçue de façon cylindrique.

9. Dispositif selon la revendication 6,
   **caractérisé**
   **en ce que** les deux sous-éléments (5, 6) de l'avant-corps (4) conçu sous forme de lentille présentent une surface de contact (16) en forme de V.

10. Dispositif selon la revendication 1 ou 4,
    **caractérisé**
    **en ce qu'**au moins une zone partielle de l'avant-corps (4) est constituée d'un matériau, dont l'impédance acoustique est approximativement égale à l'impédance acoustique de l'élément piézoélectrique (2).

11. Dispositif selon la revendication 6, 8, 9 ou 10,
    **caractérisé**
    **en ce que** l'avant-corps (4) est conçu sous forme de lentille (5 ; 5, 6) et dont au moins une zone partielle est constituée du même matériau que celui du boîtier (7).

12. Dispositif selon la revendication 1, 6, 8, 9 ou 10,
    **caractérisé**
    **en ce que** l'avant-corps (4) est conçu sous forme de lentille (5 ; 5, 6) et dont au moins une zone partielle est constituée d'une céramique.

**Fig. 1a**

**Fig. 1**

Fig. 1b

Fig. 1c

Fig. 2a

Fig. 2

Fig. 2b

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0686255 B1
- US PS4484478 A
- US PS4598593 A
- EP 0387728 A1
- US 3230766 A
- EP 1096237 A1
- US PS4205686 A
- US PS4184094 A